# EUROPÄISCHE PATENTSCHRIFT

(11) **EP 0 936 055 B1**
(45) Veröffentlichungstag und Bekanntmachung des Hinweises auf die Patenterteilung: **04.09.2002**
(21) Anmeldenummer: 98124691.1
(22) Anmeldetag: 24.12.1998
(51) Int. Cl.: B29C 65/18, B31B 23/64

(54) **Schweisstrommel**
Welding drum
Tambour de soudage

(30) Priorität: 09.02.1998 DE 19805124
(43) Veröffentlichungstag der Anmeldung: 18.08.1999
(73) Patentinhaber: Windmöller & Hölscher, D-49525 Lengerich (DE)
(72) Erfinder: Eckelt, Ulrich, 49545 Tecklenburg (DE)

(56) Entgegenhaltungen:
- EP-A- 0 638 411
- WO-A-97/27996
- DE-B- 2 162 789
- FR-A- 2 712 231

## Beschreibung

Die Erfindung betrifft einen in einem Gestell gelagerten Schweißzylinder mit einem Drehantrieb und mit in gleichen Winkelabständen über den Umfang verteilten, parallel zur Drehachse verlaufenden und stufenlos radial verstellbaren Schweißleisten, der über einen Teil seines Umfangs von dem Andrücktrum eines endlosen Andrückbandes umschlungen ist, dessen Leertrum über Umlenkrollen und die Rollen eines Bahnspeichers läuft und bei dem die mit Querschweißnähten zu versehende Bahn zwischen den das Andrücktrum begrenzenden Umlenkwalzen auf diesen auf- und von diesem abläuft.

EP 0 638 411 offenbart einen im Durchmesser Stufenlos verstellbaren Schweißzylinder, der von einem Endlos - Andrückband teilweise umschlungen ist.

Bei einem aus der DE-PS 21 62 789 bekannten Schweißzylinder dieser Art sind die den Ein- und Auslaufspalt für die mit den Querschweißnähten zu versehende Bahn begrenzenden Umlenkwalzen des endlosen Andrückbandes starr in den Seitenteilen des Maschinengestells gelagert, so daß das Andrücktrum des endlosen Andrückbandes und infolgedessen auch die mit Schweißnähten zu versehende Bahn mit sich verkleinerndem Durchmesser des Schweißzylinders nur kleinere Umfangswinkel von diesem umschlingen, was sich nachteilig auf die Qualität der Querschweißnähte auswirken kann. Eine Anpassung der Umlenkwalzen auf die unterschiedlichen Schweißzylinderdurchmesser wäre bei dem bekannten Schweißzylinder mit aufwendigen Umrüstarbeiten verbunden.

Aufgabe der Erfindung ist es daher, einen Schweißzylinder der eingangs angegebenen Art zu schaffen, bei dem die Umlenkrollen in einfacher Weise auf unterschiedliche Durchmesser des Schweißzylinders einstellbar sind.

Erfindungsgemäß wird diese Aufgabe dadurch gelöst, daß in dem Gestell zwei schwenkbare und feststellbare Hebelpaare gelagert sind, die an ihren freien Enden die Umlenkwalzen tragen, über die das Andrückband auf den Schweißzylinder aufund von diesem abläuft.

Bei dem erfindungsgemäßen Schweißzylinder lassen sich die Hebel in einfacher Weise lösen und in ihre an den jeweiligen Durchmesser des Schweißzylinders angepaßte Stellung verschwenken und in dieser fixieren.

Zweckmäßigerweise sind an den Hebeln zusätzliche Umlenkrollen für die mit den Schweißnähten zu versehende Bahn gelagert. Diese Umlenkrollen oder Umlenkwalzen können näher an den freien Enden der Hebel gelagert sein als die Umlenkrollen oder Umlenkwalzen für das Andrückband.

Zweckmäßigerweise sind an den Hebeln jeweils zwei Umlenkrollen für die zu verschweißende Bahn vorgesehen, von denen das einlaufseitige Rollen- oder Walzenpaar von der Bahn S-förmig umschlungen werden kann.

Nach einer bevorzugten Ausführungsform ist vorgesehen, daß an einem Hebel jedes Hebelpaares ein schwenkbarer und feststellbarer, eine Stützrolle tragender Stützhebel gelagert ist, der zwischen einer sich auf einer Schweißleiste abstütsenden Stellung und einer inaktiven Stellung verschwenkbar ist. Dieser Stützhebel wird bei einer Radialverstellung der Schweißleisten, also bei einer Änderung des Durchmessers des Schweißzylinders, in Anlage an eine Schweißleiste gebracht, so daß die die Umlenkrollen oder Umlenkwalzen tragenden Hebelpaare zusammen mit der Radialverstellung der Schweißleisten verstellt werden und sich nach einer Verstellung der Schweißleisten und Fixieren der Hebel die Umlenkrollen oder -walzen in ihrer richtigen Stellung befinden. Der Stützhebel hält dabei die die Umlenkwalzen oder Umlenkrollen tragenden Hebelpaare in einem Abstand zu den Schweißleisten, der genügend groß ist, um auch nach einer Verstellung der Schweißleisten und der die Umlenkrollen tragenden Hebel noch eine Feinjustierung der Schweißleisten vornehmen zu können, so daß eine passergerechte Ausführung der Querschweißnähte durch die Schweißleisten gewährleistet ist.

Um die Stützhebel für den Verstellvorgang einschwenken und vor dem Betrieb wieder ausschwenken zu können, sind diese zweckmäßigerweise mit einem Schwenkantrieb versehen, der aus einer pneumatischen Kolben-Zylinder-Einheit bestehen kann.

Zweckmäßigerweise sind die Hebelpaare in Richtung auf den Schweißzylinder durch eine federnde Einrichtung beaufschlagt. Diese stellt sicher, daß sich die Hebelpaare nach ihrem Lösen über die Stützhebel auf Schweißleisten abstützen, so daß die Hebel gleichzeitig mit der Radialverstellung der Schweißleisten automatisch verstellt werden können.

In weiterer Ausgestaltung der Erfindung ist vorgesehen, daß die Hebelpaare auf im Gestell gelagerten Wellen befestigt sind, die Haltescheibensektoren tragen, die durch Klemmstücke gegenüber dem Gestell blockierbar sind. Durch Lösen und Feststellen der Haltescheibensektoren können die Hebelpaare zum Zwecke des Verstellens gelöst und in neuen Stellungen blockiert werden.

Zweckmäßigerweise sind die Klemmstücke an Hebeln angeordnet, die durch Druckmittel-Kolben-Zylinder-Feder-Einheiten bewegbar sind.

Nach einer erfinderischen Weiterbildung ist vorgesehen, daß die bewegliche Rolle oder die beweglichen Rollen des Bahnspeichers durch einen pneumatischen Zylinder verstellbar sind, dessen Gas- oder Luftdruck auf eine härtere Betriebsstellung und eine weichere Verstellstellung einstellbar ist. Auf diese Weise ist das Andrückband sowohl während des Betriebes als auch während des Verstellens federnd vorgespannt, wobei diese federnde Vorspannung zum Zwecke der Verstellung weicher ist.

Nach einer weiteren bevorzugten Ausführungsform ist vorgesehen, daß die auf die Hebelpaare wirkenden, sich aus dem endlosen Andrückband ergebenden resultierenden Kräfte auf Linien liegen, die zwischen den Schwenkachsen der Hebel und dem Schweißzylinder verlaufen. Auf diese Weise sind die Hebel immer in Richtung auf den Schweißzylinder federnd beaufschlagt, so daß auf besondere Federeinrichtungen verzichtet werden kann.

Ein Ausführungsbeispiel der Erfindung wird nachstehend anhand der Zeichnung näher erläutert. In dieser zeigt
- Fig. 1: eine Seitenansicht des in einem Maschinengestell gelagerten Schweißzylinders in auf den geringsten Schweißzylinderdurchmesser zusammengefahrenen Zustand der Schweißleisten in schematischer Darstellung,
- Fig. 2: eine der Fig. 1 entsprechende Darstellung des Schweißzylinders, dessen Schweißleisten auf den größten Durchmesser des Schweißzylinders ausgefahren sind, in einem Schnitt längs der Linie II - II in Fig. 3 und
- Fig. 3: eine Draufsicht auf den Schweißzylinder nach Fig. 2, bei dem die die Umlenkwalzen tragenden Hebelpaare der besseren Übersichtlichkeit halber im auseinandergezogenen Zustand dargestellt sind.

In einem Maschinengestell, von dem schematisch nur die Seitengestelle 1,1' dargestellt sind, ist ein mit einem Antrieb versehener Schweißzylinder 2 drehbar gelagert, dessen radial verstellbaren Schweißleisten 3 schematisch durch etwa dreieckige Segmente 3 angedeutet sind.

Der Schweißzylinder, die Schweißleisten und deren Verstellantrieb sind grundsätzlich in der Weise ausgestaltet, wie es in der DE-PS 21 62 789 beschrieben ist, so daß zur näheren Darstellung auf diese Veröffentlichung verwiesen wird.

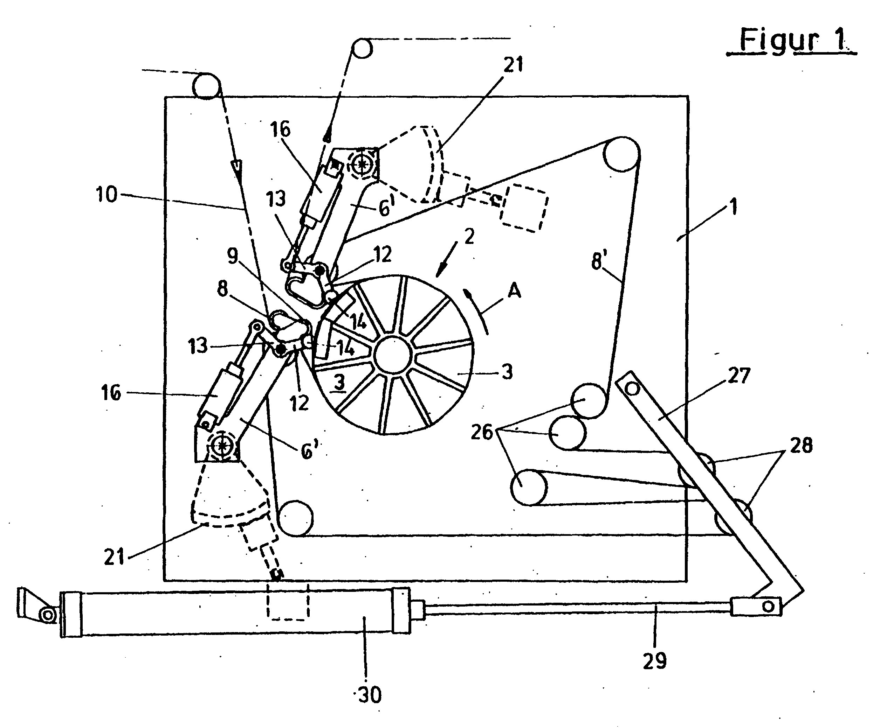

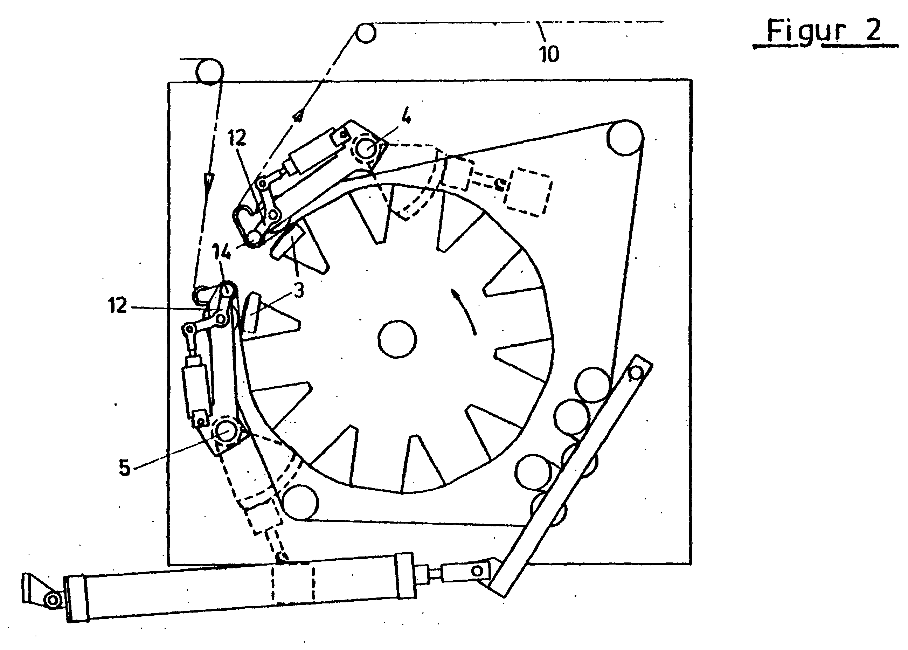

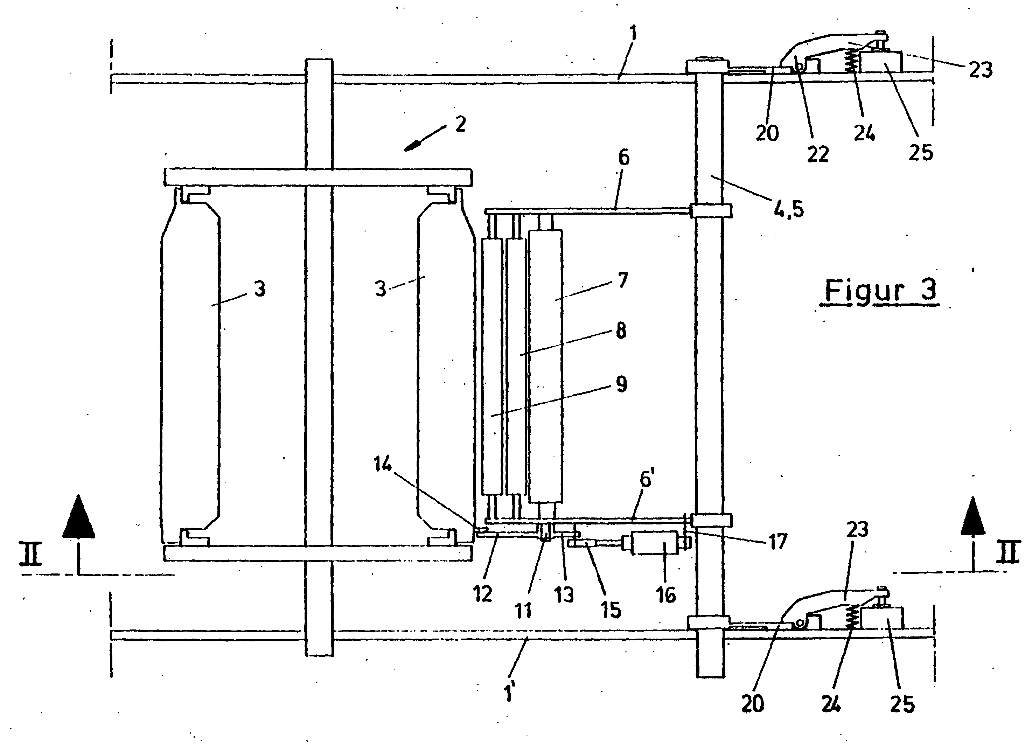

In den Seitengestellen 1, 1' sind in der aus Fig. 3 ersichtlichen Weise begrenzt. schwenkbare Wellen 4, 5 gelagert, von denen jede ein Hebelpaar 6, 6' trägt, an deren freien Enden jeweils eine Umlenkwalze 7 für ein endloses Andrückband 8 und weiter außen zwei Umlenkrollen 8, 9 zur Zuführung bzw. Abführung der mit Querschweißnähten zu versehenden doppelt liegenden Bahn 10 aus thermoplastischem Kunststoff frei drehbar gelagert sind. An dem Hebel 6' jedes Hebelpaars 6, 6' ist auf einem Achszapfen 11 ein Winkelhebel mit den Armen 11, 13 schwenkbar gelagert, dessen einer Arm 12 einen Stützhebel bildet, an dessen freien Ende eine Stützrolle 14 frei drehbar gelagert ist. An dem anderen Hebelarm 3 ist die Kolbenstange 15 eines Pneumatikzylinders 16 angelenkt, der seinerseits um einen Achszapfen 17 schwenkbar auf dem Hebel 6' gelagert ist. Durch Aus- und Einfahren der Kolbenstangen 15 der Pneumatikzylinder 16 lassen sich die Stützhebel 12 zwischen ihrer inaktiven eingeschwenkten und aktiven ausgeschwenkten Stützstellung verschwenken. Die aktive Stützstellung, in der sich die Stützrollen 14 auf den Schweißleisten 3 abstützen, ist aus Fig. 1 ersichtlich, während in Fig. 2 die Stützhebel 12 in ihrer eingeschwenkten inaktiven Stellung dargestellt sind.

Die Wellen 4, 5 sind im Bereich der Seitengestelle 1, 1' mit Haltescheibensegmenten 20 fest verbunden, die radiale Hebel bilden. Die Haltescheibensegmente 20 sind mit kreisbogenförmig gekrümmten Klemmflächen 21 versehen, an denen die kürzeren Hebelarme 22 von Klemmhebeln angreifen, deren längeren Hebelarme 23 durch Druckfedern 24 in ihre aus Fig. 3 ersichtliche Klemmstellung verschwenkt werden. Zum Lösen der Blockierung sind pneumatische Kolben-Zylinder-Einheiten 25 vorgesehen, die zur Freigabe der Haltescheibensegmente 20 die Kraft der Federn 24 überwinden.

In dem Maschinengestell sind gestellfeste Umlenkrollen 26 und an einem in dem Maschinengestell gelagerten Hebelpaar 27 verschwenkbare Umlenkrollen 28 gelagert, die von dem Leertrum des Andrückbandes 8 in der dargestellten Weise umschlungen sind, so daß sie einen Bahnspeicher für das Andrückband bilden. An das freie Ende des die schwenkbaren Umlenkrollen 28 tragenden Hebelpaares 27 ist die Kolbenstange 29 eines Pneumatikzylinders 30 angelenkt, der seinerseits schwenkbar im Maschinengestell gelagert ist Der Hydraulikzylinder 30 hält den Bahnspeicher 26 bis 28 unter der erforderlichen federnden Vorspannung.

Wie aus den Fig. 1 und 2 ersichtlich ist, umschlingt das endlose Andrückband 8 die beiden Umlenkwalzen 7 in der Weise, daß sich die Zugkräfte der beiden Trume zu resultierenden Kräfte addieren, deren Wirkungslinien zwischen den Wellen 4, 5 und der Schweißwalze 2 verlaufen, so daß in jeder Schwenkstellung der Hebel 6, 6' wirksame Hebelarme, an denen die resultierenden Kräfte angreifen, vorhanden sind, die bestrebt sind, diese in Richtung auf den Schweißzylinder 2 zu verschwenken.

Die Umlenkrollen 8, 9 werden auf der Einlaufseite der doppelt liegenden Bahn 10 S-förmig von der Bahn und auf der Auslaufseite U-förmig umschlungen.

Sollen die Schweißleisten 3 auf ein anderes Format verstellt werden, werden die Winkelhebel 12, 13 nach Lösen der Haltescheibensektoren 20 durch-die Pneumatikzylinder 25 durch die Pneumatikzylinder 16 in ihre aus Fig. 1 ersichtliche Stützstellung verschwenkt, in der sich die Stützrollen 14 und die Stützhebel 12 auf den Schweißleisten 3 abstützen. Werden nun die Schweißleisten 3 in radialer Richtung auf ihre geänderte Stellung verfahren, nehmen sie dabei über die Stützrollen 14 die die Umlenkwalzen tragenden Hebel 6, 6' mit, so daß sich die Umlenkwalzen 7 bis 9 immer in ihrer richtigen Stellung bezogen auf den Ausfahrzustand der Schweißleisten des Schweißzylinders befinden.

Während der Verstellung der Schweißleisten wird der Luftdruck des Pneumatikzylinders 30 abgesenkt, so daß das Andrückband 8 nur mit einer geringeren Kraft vorgespannt ist und die Verstellung gegen eine geringere Kraft der von den Trumen des Andrückbandes erzeugten resultierenden Kräfte erfolgen kann.

## Patentansprüche

1. In einem Gestell (1, 1') gelagerter Schweißzylinder (2) mit einem Drehantrieb und mit in gleichen Winkelabständen über den Umfang verteilten, parallel zur Drehachse verlaufenden und stufenlos in radialer Richtung verstellbaren Schweißleisten (3),
der über einen Teil seines Umfangs von dem Andrücktrum eines endlosen Andrückbandes (8) umschlungen ist, dessen Leertrum über Umlenkrollen (7) und die Rollen eines Bahnspeichers (26, 28) läuft und
bei dem die mit Querschweißnähten zu versehende Bahn (10) zwischen den das Andrücktrum begrenzenden Umlenkwalzen (7) auf diesen auf- und .von diesem abläuft,
**dadurch gekennzeichnet,**
**daß** in dem Gestell (1, 1') zwei schwenkbare und feststellbare Hebelpaare (6, 6') gelagert sind, die an ihren freien Enden die Umlenkrollen oder Umlenkwalzen (7) tragen, über die das Andrückband (8) auf den Schweißzylinder (2) auf und von diesem abläuft.

2. Schweißzylinder nach Anspruch 1, **dadurch gekennzeichnet, daß** an den Hebelpaaren (6, 6') zusätzliche Umlenkrollen oder Umlenkwalzen (8, 9) für die mit Schweißnähten zu versehende Bahn (10) gelagert sind.

3. Schweißzylinder nach Anspruch 2, **dadurch gekennzeichnet, daß** die Hebelpaare (6, 6') jeweils zwei Umlenkrollen (8, 9) für die Bahn (10) tragen.

4. Schweißzylinder nach einem der Ansprüche 1 bis 3, **dadurch gekennzeichnet, daß** an einem Hebel (6') jedes Hebelpaares (6, 6') ein schwenkbarer und feststellbarer, eine Stützrolle (14) tragender Stützhebel (12) gelagert ist, der zwischen einer sich auf einer Schweißleiste abstützenden Stellung und einer inaktiven Stellung verschwenkbar ist.

5. Schweißzylinder nach Anspruch 4, **dadurch gekennzeichnet, daß** der Stützhebel (12) mit einem Schwenkantrieb versehen ist

6. Schweißzylinder nach einem der Ansprüche 1 bis 5, **dadurch gekennzeichnet, daß** die Hebelpaare (6, 6') in Richtung auf den Schweißzylinder (2) durch eine federnde Einrichtung beaufschlagt sind.

7. Schweißzylinder nach einem der Ansprüche 1 bis 6, **dadurch gekennzeichnet, daß** die Hebelpaare (6, 6') auf im Gestell (1, 1') gelagerten Wellen (4, 5) befestigt sind, die Haltescheibensektoren (20) tragen, die durch Klemmstücke (22) gegenüber dem Gestell (1, 1') blockierbar sind.

8. Schweißzylinder nach Anspruch 7, **dadurch gekennzeichnet, daß** die Klemmstücke (22) an Hebeln angeordnet sind, die durch Druckmittel-Kolben-Zylinder-Feder-Einheiten (24, 25) bewegbar sind.

9. Schweißzylinder nach einem der Ansprüche 1 bis 8, **dadurch gekennzeichnet, daß** die bewegliche Rolle oder beweglichen Rollen (26, 28) des Bahnspeichers durch eine pneumatische Kolben-Zylinder-Einheit (29, 30) verstellbar sind, dessen Gas- oder Luftdruck auf eine härtere Betriebsstellung und auf eine weichere Verstellstellung einstellbar ist.

10. Schweißzylinder nach einem der Ansprüche 1 bis 9, **dadurch gekennzeichnet, daß** die auf die Hebelpaare (6, 6') wirkenden, sich aus dem endlosen Andrückband (8) ergebenden resultierenden Kräfte auf einer Linie liegen, die zwischen den Schwenkachsen der Hebel (4, 5) und dem Schweißzylinder (2) verlaufen.

## Claims

1. Welding cylinder (2) which is mounted in a frame (1, 1') and has a rotary drive and welding bars (3) which are distributed at regular angular intervals over the circumference, run parallel to the axis of rotation and can be adjusted in a continuously variable manner in the radial direction,
which cylinder is surrounded, over part of its circumference, by the pressure-exerting strand of an endless pressure-exerting belt (8), the empty strand of which runs over guide rolls (7) and the rolls of a web store (26, 28), and
in which cylinder the web (10) which is to be provided with transverse weld seams runs onto and off the cylinder between the guide rollers (7) which delimit the pressure-exerting strand,
**characterized**
**in that** two pivotable and lockable lever pairs (6, 6'), which at their free ends bear the guide rolls or guide rollers (7) via which the pressure-exerting belt (8) runs onto and off the welding cylinder (2), are mounted in the frame (1, 1').

2. Welding cylinder according to Claim 1,
**characterized in that** additional guide rolls or guide rollers (8, 9) for the web (10) which is to be provided with weld seams are mounted on the lever pairs (6, 6').

3. Welding cylinder according to Claim 2, **characterized in that** the lever pairs (6, 6') each bear two guide rolls (8, 9) for the web (10).

4. Welding cylinder according to one of Claims 1 to 3, **characterized in that** a pivotable and lockable supporting lever (12), which bears a supporting roll (14) and can pivot between a position in which it is supported on a welding bar and an inactive position, is mounted on one lever (6') of each lever pair (6, 6').

5. Welding cylinder according to Claim 4, **characterized in that** the supporting lever (12) is provided with a pivot drive.

6. Welding cylinder according to one of Claims 1 to 5, **characterized in that** the lever pairs (6, 6') are acted on in the direction of the welding cylinder (2) by a sprung device.

7. Welding cylinder according to one of Claims 1 to 6, **characterized in that** the lever pairs (6, 6') are secured to shafts (4, 5) which are mounted in the frame (1, 1') and bear holding-disc sectors (20), which can be blocked with respect to the frame (1, 1') by clamping pieces (22).

8. Welding cylinder according to Claim 7, **characterized in that** the clamping pieces (22) are arranged on levers which can be moved by pressure-medium piston/cylinder spring units (24, 25).

9. Welding cylinder according to one of Claims 1 to 8, **characterized in that** the movable roll or rolls (26, 28) of the web store can be adjusted by a pneumatic piston/cylinder unit (29, 30), the gas or air pressure of which can be set to a harder operating position and to a softer adjustment position.

10. Welding cylinder according to one of Claims 1 to 9, **characterized in that** the resultant forces which act on the lever pairs (6, 6') and result from the endless pressure-exerting belt (8) lie on a line which runs between the pivot axes of the levers (4, 5) and the welding cylinder (2).

## Revendications

1. Tambour de soudage (2) logé dans un bâti (1, 1'), avec un dispositif d'entraînement en rotation et avec des baguettes de soudage (3) réparties à des écarts angulaires égaux sur le pourtour, s'étendant parallèlement à l'axe de rotation et ajustable progressivement dans la direction radiale, qui est entouré, sur une partie de son pourtour, par le brin d'application d'une bande d'application sans fin (8) dont le brin vide passe sur des rouleaux de renvoi (7) et les rouleaux d'un dispositif de stockage de bande (26, 28) et
où la bande (10) à pourvoir de soudures transversales passe entre les rouleaux de renvoi (7) délimitant le brin d'application sur ceux-ci et au loin de ceux-ci,
**caractérisé en ce que** sont logées dans le bâti (1, 1') deux paires de leviers (6, 6') pivotantes et pouvant être fixées qui portent à leurs extrémités libres les rouleaux de renvoi ou cylindres de renvoi (7) sur lesquels la bande d'application (8) passe sur le tambour de soudage (2) et au loin de celui-ci.

2. Tambour de soudage selon la revendication 1, **caractérisé en ce que** sont logés aux paires de leviers (6, 6') des rouleaux de renvoi ou cylindres de renvoi additionnels (8, 9) pour la bande (10) à pourvoir de soudures.

3. Tambour de soudage selon la revendication 2, **caractérisé en ce que** les paires de leviers (6, 6') portent respectivement deux rouleaux de renvoi (8, 9) pour la bande (10).

4. Tambour de soudage selon l'une des revendications 1 à 3, **caractérisé en ce qu'**il est logé à un levier (6') de chaque paire de leviers (6, 6') un levier de support (12) pivotant et pouvant être fixé, portant un rouleau de support (14) qui peut être amené à pivoter entre une position prenant appui sur une baguette de soudage et une position inactive.

5. Tambour de soudage selon la revendication 4, **caractérisé en ce que** le levier de support (12) est pourvu d'une commande de pivotement.

6. Tambour de soudage selon l'une des revendications 1 à 5, **caractérisé en ce que** les paires de leviers (6, 6') peuvent être sollicitées en direction du tambour de soudage (2) par une installation à ressorts.

7. Tambour de soudage selon l'une des revendications 1 à 6, **caractérisé en ce que** les paires de leviers (6, 6') sont fixées sur des arbres (4, 5) logés dans le bâti (1, 1') qui portent des secteurs de disque de maintien (20) qui peuvent être bloqués par des pièces de serrage (22) relativement au bâti (1, 1').

8. Tambour de soudage selon la revendication 7, **caractérisé en ce que** les pièces de serrage (22) sont disposées à des leviers qui sont déplaçables par des unités élastiques à piston et à cylindre à fluide sous pression (24, 25).

9. Tambour de soudage selon l'une des revendications 1 à 8, **caractérisé en ce que** le rouleau mobile ou les rouleaux mobiles (26, 28) du dispositif de stockage de bande sont déplaçables par une unité à piston et à cylindre pneumatique (29, 30) dont la pression de gaz ou d'air est réglable à une position de fonctionnement plus dure et à une position d'ajustage plus souple.

10. Tambour de soudage selon l'une des revendications 1 à 9, **caractérisé en ce que** les forces agissant sur les paires de leviers (6, 6'), résultant de la bande d'application sans fin (8) se situent sur une ligne qui s'étend entre les axes de pivotement des leviers (4, 5) et le tambour de soudage (2).
